(19) Europäisches Patentamt
European Patent Office
Office européen des brevets

(11) Publication number: **0 034 020**
**B1**

(12) **EUROPEAN PATENT SPECIFICATION**

(45) Date of publication of patent specification: **25.04.84**

(21) Application number: **81300391.0**

(22) Date of filing: **30.01.81**

(51) Int. Cl.³: **C 08 F 236/04,** C 08 L 9/00 //(C08F236/04, 212/04, 228/02)

# (54) Sulphonated co- and terpolymer.

(30) Priority: **31.01.80 US 117196**
**31.01.80 US 117197**
**31.01.80 US 117198**
**31.01.80 US 117199**

(43) Date of publication of application:
**19.08.81 Bulletin 81/33**

(45) Publication of the grant of the patent:
**25.04.84 Bulletin 84/17**

(84) Designated Contracting States:
**BE DE FR GB IT NL**

(56) References cited:
**GB - A - 895 033**

(73) Proprietor: **Exxon Research and Engineering Company**
**P.O.Box 390 180 Park Avenue**
**Florham Park New Jersey 07932 (US)**

(72) Inventor: **Lenz, Robert William University of Massachusetts**
**Chem. Eng. Dept. Goesmann Labs**
**Amherst, Massachusetts 01003 (US)**
Inventor: **Lundberg, Robert Dean**
**4 Brian Drive**
**Bridgewater New Jersey (US)**
Inventor: **Oster, Bernd**
**111 Malden**
**Holden Massachusetts (US)**
Inventor: **Siadat, Bahram**
**43 Featherhead**
**Columbia Maryland (US)**
Inventor: **Weiss, Robert Alan**
**59 Mansfield Apartments**
**Storrs Connecticut (US)**
Inventor: **Werner, Allen**
**473 Fairmount Avenue**
**Chatham New Jersey (US)**

(74) Representative: **Field, Roger Norton et al,**
**ESSO Engineering (Europe) Ltd. Patents & Licences Apex Tower High Street**
**New Malden Surrey KT3 4DJ (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 034 020 B1**

Sulphonated Co- and Terpolymer

The present invention relates to a free radical copolymerization process for the preparation of sulfonate containing water insoluble co- or terpolymers, wherein the resultant co- or terpolymers usually have an $\bar{M}n$ as measured by GPC of 5,000 to 200,000 and these co- or terpolymers have at least 0.5 weight percent of chemically combined sulfur therein, are substantially gel free, thermally stable, and stable oxidatively. The free radical copolymerization process of the present invention can be generally described as a free radical emulsion polymerization of at least one conjugated diene with a sulfonate monomer which is water soluble, at a temperature sufficient to cause polymerization, wherein the initiator is preferably based on a peroxide initiator accelerated by a reducing agent, and suitable surfactants are employed. Upon completion of the free radical polymerization, the resultant latex is coagulated and the water insoluble polymer is recovered.

The present invention also relates to polymeric compositions of the sulfonated co- or terpolymers which comprise a homogeneous blend of the sulfonated co- or terpolymers and at least one additive selected from inorganic fillers, non-polar process oil, and preferential plasticizers and mixtures thereof. The resultant polymeric compositions are formed by suitable plastic molding processes into elastomeric articles such as a garden hose and unit sales for footwear applications. The resultant elastomeric article has excellent low temperature flexibility, good resilience, and a rubber-like feel.

The solid elastomeric co- or terpolymer of the present invention comprises at least 80% by weight of units derived from at least one conjugated diene having from 4 to 10 carbon atoms per molecule and a minor proportion by weight of units derived from of a metal or amine neutralized sulfonate monomer characterized by the formula:

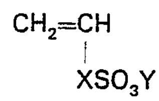

where X is $(CH_2)_n$, or aromatic wherein n = 0, 1, 2, 3 or 4 and Y is a cation selected from Groups IA, IIA, IB and IIB of the periodic table or an amine of the formula:

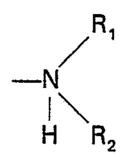

where $R_1$ and $R_2$ are aliphatic groups of $C_1$ to $C_{12}$ or hydrogen, the co- or terpolymer being water insoluble and having at least 0.5 weight percent to less than 5 weight percent of sulfur chemically combined.

The present invention also relates to the formation of sulfonate containing co- or terpolymers which are formed by a free radical co- or terpolymerization process. The monomers used in the free radical emulsion copolymerization process are conjugated dienes or a mixture of styrene and butadiene which are co- or terpolymerized with sulfonate containing monomers.

In general, the conjugated diene or mixture of styrene and butadiene and sulfonate containing monomer is dispersed in a water phase in the presence of an initiator which is preferably soluble in the hydrocarbon phase, a water soluble reducing agent, and a suitable surfactant, wherein the temperature is sufficient to initiate polymerization. The resultant latex is coagulated usually by the addition of an aqueous salt solution and the recovered co- or terpolymer is washed with water and subsequently dried under vacuum at room temperature. Alternatively, the latex can be coagulated by the addition of methanol.

The co- or terpolymers formed from the free radical emulsion co- or terpolymerization process of the present invention can be generally described as having an $\bar{M}n$ as measured by GPC of 5,000 to 200,000, more preferably 10,000 to 100,000. The co- or terpolymers of the present invention contain 0.5 to 5 weight percent of chemically combined sulfur, more preferably to 0.6 to 3, most preferably 0.7 to 2.0 weight percent sulfur. Typical, but non-limiting examples of the copolymers which can be formed by the present free radical emulsion co- or terpolymerization process are: butadiene/sodium styrene sulphonat copolymer, butadiene/styrene/sodium styrene sulphonate terpolymer, butadiene/sodium styrene sulfonate copolymer, isoprene/sodium styrene sulfonate copolymer, butadiene/sodium vinyl sulfonate copolymer, isoprene/sodium vinyl sulfonate copolymer. Obviously an infinite number of copolymers and even terpolymers can be formed by the present free radical co- or terpolymerization process. Typically, the copolymerization of any conjugated diene as so defined herein can be readily copolymerized with any sulfonate containing monomer as is defined herein. Terpolymers with acrylonitrile or vinyl chloride as the termonomers with the aforementioned dienes are also contemplated.

The conjugated dienes of the co- and terpolymers of the present invention are generally defined

as aromatic and acyclic conjugated dienes containing from 4 to 10 carbon atoms per molecule, more preferably 4 to 6 carbon atoms per molecule. Typical, but non-limiting examples of acyclic conjugated dienes are piperidene, 1,3-butadiene, isoprene (2-methyl-1,3-butadiene), 2,3-dimethyl, 1,3-butadiene, 1,3-pentadiene, 2-methyl-1,3-pentadiene, 2,3-dimethyl-1,3-pentadiene, 3-methyl-1,3-pentadiene, 2,3-dimethyl-1,3-pentadiene, 3-methyl-1,3-pentadiene, 2-phenyl butadiene, chloroprene and piperidene. Typical but non-limiting examples of cyclic conjugated dienes are cyclopentadiene and methyl cyclopentadiene. The preferred conjugated dienes of the present invention are 1,3-butadiene, isoprene and chloroprene. In the formation of the sulfonate containing co- or terpolymer, one co- or terpolymerizes one of the aforementioned conjugated dienes with the sulfonate containing monomer. Sulfonate containing terpolymers can be readily formed by copolymerizing the sulfonate containing monomer with a mixture of two of the above identified conjugated dienes or with a mixture of styrene and a conjugated diene such as butadiene. A particularly preferred combination of comonomers in forming a sulfonated terpolymer is a mixture of styrene and butadiene.

The sulfonate containing monomers for use in the invention which are water soluble can be generally described as a monomer having unsaturation and a metal or amine sulfonate group. The metal or amine neutralized sulfonate monomer is characterized by the formula:

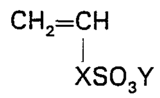

where X is aromatic or $(CH_2)_n$, where n = 0, 1, 2, 3 or 4 and Y is a cation of Groups IA, IIA, IB or IIB of the Periodic Table or an amine of the formula:

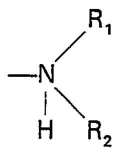

where $R_1$ and $R_2$ are aliphatic groups of $C_1$ to $C_{12}$ or hydrogen. Particularly suitable metal cations are sodium, potassium, and zinc, and an especially preferred metal cation is sodium. Typical, but non-limiting examples of suitable sulfonate containing monomers are:

1) $CH_2{=}CHSO_3{}^-Na^+$ sodium vinyl sulfonate
2) $CH_2{=}CHCH_2SO_3{}^-Na^+$ sodium allyl sulfonate
3) 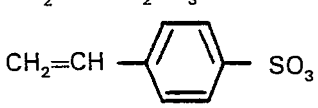 sodium styrene sulfonate

An especially preferred sulfonate containing monomer is metal styrene sulfonate. The molar ratio of sulfonate containing monomer to conjugated diene is preferably 1/200 to about 1/5, more preferably 1/150 to 1/6 and most preferably 1/100 to 1/9.

The redox emulsion polymerization recipe used in this invention is effective in initiating the copolymerization of water-insoluble and water-soluble comonomers in an emulsion system. Because the peroxide initiator is dissolved in the hydrocarbon monomer and the redox activator is dissolved in the water, the surface of the micelle/growing polymer particle is believed to be the locus of formation of initiator molecules as well as the polymerization locus. Water phase homopolymerization of the polar, water soluble monomer is effectively depressed because of low primary radical concentration in the aqueous phase.

Similarly, the activity of the free radical catalyst in the hydrocarbon monomer phase is substantially less than in the vicinity of the reducing agent. As a result the polymerization of homopolymers is believed to be effectively depressed.

Reducing agents suitable for this invention are those known in the art with the additional requirement that they be soluble in water. A preferred reducing agent is triethylene tetraamine.

A variety of free radical catalysts can be employed in this invention with the requirement that they are substantially soluble in the diene monomer phase. This includes a preferential class of free radical initiators such as benzoyl peroxide, cumene peroxide, diisopropylbenzene hydroperoxide, t-butyl hydroperoxide and similar systems which will be preferentially soluble in the monomer phase as opposed to the aqueous phase. There are a large number of such peroxides used in the art and those having the appropriate solubility behavior and suitable decomposition temperatures in the presence of the reducing agents are satisfactory for the purposes of this invention.

The surfactants employed for this invention are varied and well known in the art. The typical emulsifiers or surfactants can be employed, however, some are more effective than others in generating latices of better stability. A preferred emulsifier is sodium lauryl sulfate.

The buffering agents employed in the present polymerization process are selected from sodium carbonate, ammonia, sodium acetate, trisodium phosphate, etc. These buffering agents are employed at a concentration of 0.1 to 5 grams/100 grams water employed in the emulsion system.

Chain transfer agents can be readily employed in the present polymerization process for controlling the molecular weight of the resultant copolymer. The concentration of chain transfer agent is about .05 to about 0.75 grams/100 grams of the combined weight of the sulfonate containing monomer and the conjugated diene.

The free radical emulsion co- or terpolymerization of the water soluble sulfonate containing polymer and at least one conjugated diene or a mixture of styrene and conjugated diene yields a stable latex, wherein the resultant water insoluble co- or terpolymer is not covalently crosslinked and possesses substantial ionic crosslinking, and has 0.5 to 5 weight percent of chemically combined sulfur, more preferably 0.6 to 3. The resultant latex can be coagulated by the addition of an aqueous salt solution to the emulsion at a volume ratio of the aqueous salt solution to total volume of the emulsion of 10 to 0.5, more preferably 3 to .7, and most preferably 2 to 1. The water insoluble co- or terpolymer is recovered by filtration and subsequently washed with water and dried under vacuum conditions. Alternatively, the polymer can be coagulated by precipitation with alcohol such as methanol.

A preferential plasticizer can be incorporated into the neutralized sulfonated elastomeric co- or terpolymer at less than 80 parts by weight per 100 parts of the sulfonated co- or terpolymer, more preferably at 5 to 60, and most preferably at 8 to 30. The preferential plasticizers are fatty acids having 8 to 30 carbon atoms per molecule or metallic salts of the fatty acids or mixtures thereof, wherein the metal ion of the metallic salt of the fatty acid is antimony, iron, aluminum, lead or Groups IA, IIA, IB or IIB of the Periodic Table of Elements. Alternatively, other preferential plasticizers are organic esters, phenols, trialkyl phosphates, alcohols, amines, amides, ammonium, salts of carboxylic acids or mixtures thereof. The preferred plasticizers are fatty acids or metallic salts of fatty acid or mixtures thereof. Especially preferred plasticizers are zinc stearate or calcium stearate. The resultant neutralized sulfonated elastomeric polymer with preferential plasticizer is isolated from the solution by conventional steam stripping and filtration.

The neutralized sulfonated elastomeric polymer can be blended with a filler and a non-polar backbone process oil by techniques well known in the art. For example, the blend composition can be compounded on a two-roll mill. Other methods known in the art which are suitable for making these compositions include those methods employed in the plastic and elastomer industries for mixing polymer systems. A suitable polymer blend composition of this invention can be obtained through the use of a high shear batch intensive mixer called the Banbury. Alternatively, economic advantages in terms of time and labor savings can be obtained through the use of a Farrel Continuous Mixer, a twin screw extruder, or tandem extrusion techniques which are continuous mixing types of equipment. The Banbury mixing device is the preferred batch type mixer, and the twin screw extruder is the preferred continuous mixer.

The fillers employed in the present invention are selected from talcs, ground calcium carbonate, water precipitated calcium carbonate, or delaminated, calcined or hydrated clays and mixtures thereof. These fillers are incorporated into the blend composition at 25 to 300 parts by weight per 100 parts of the sulfonated co- or terpolymer, more preferably at 25 to 250 and most preferably at 25 to 200. Typically, these fillers have a particle size of 0.03 to 20 $\mu$m, more preferably 0.3 to 10, and most preferably 0.5 to 10. The oil absorption as measured by grams of oil absorbed by 100 grams of filler is 10 to 100, more preferably 10 to 85 and most preferably 10 to 75. Typical fillers employed in this invention are illustrated in Table I.

TABLE I

| Filler | Code No. | Oil Absorption grams of oil/100 grams of filler | Specific Gravity | Avg. Particle Size $\mu m$ | pH |
|---|---|---|---|---|---|
| Calcium carbonate ground | Atomite | 15 | 2.71 | | 9.3 |
| Calcium carbonate precipitated | Purecal U | 35 | 2.65 | .03—.04 | 9.3 |
| Delaminated clay | Polyfil XB | 30 | 2.61 | 4.5 | 6.5—7.5 |
| Hydrated clay | Suprex | | 2.6 | 2 | 4.0 |
| Calcined clay | Icecap K | 50—55 | 2.63 | 1 | 5.0—6.0 |
| Talc magnesium silicate | Mistron Vapor | 60—70 | 2.75 | 2 | 9.0—7.5 |

The word 'Mistron' is a registered Trade Mark, at least in the United Kingdom.

The oils employed in the present invention are non-polar process oils having less than 2 wt.% polar type compounds as measured by molecular type clay gel analysis. These oils are selected from paraffinics ASTM Type 104B as defined in ASTM—D—2226—70, aromatics ASTM Type 102 or naphthenics ASTM Type 104A, wherein the oil has a flash point by the Cleveland open cup of at least 350°F, (177°C) a pour point of less than 40°F (44°C), a viscosity of 70 to 3000 ssu's at 100°F. (38°C) and a number average molecular weight of about 300 to 1000, and more preferably 300 to 750. The preferred process oils are paraffinics. Table II illustrates typical oils, encompassed by the scope of this invention. (The word 'Cleveland' is a registered Trade Mark, at least in the United Kingdom).

The oils are incorporated into the blend composition at a concentration level of 20 to 200 parts by weight per 100 parts of the sulfonated co- or terpolymer, more preferably at 20 to 175, and most preferably at 25 to 150.

TABLE II

| Type Oil | Oil Code No. | Viscosity ssu | Mn | % Polars | % Aromatic | % Saturates |
|---|---|---|---|---|---|---|
| Paraffinic | Sunpar 115 | 155 | 400 | 0.3 | 12.7 | 87.0 |
| Paraffinic | Sunpar 180 | 750 | 570 | 0.7 | 17.0 | 82.3 |
| Paraffinic | Sunpar 2280 | 2907 | 720 | 1.5 | 22.0 | 76.5 |
| Aromatic | Flexon 340 | 120 | — | 1.3 | 70.3 | 28.4 |
| Napthenic | Flexon 765 | 505 | — | 0.9 | 20.8 | 78.3 |

The word 'Flexon' is a registered Trade Mark at least in the United Kingdom.

The filler to oil ratio in the present application is critical and should be 0.2 to 2, more preferably 0.5 to 1.75 and most preferably 0.75 to 1.25.

Various other additives can be incorporated into the blend compositions to improve the physical properties, the appearance, the chemical properties of the formed elastomeric article or to modify the processability of the blend compositions.

Additionally, reinforcing fillers can be added as additives to the blends of sulfonated polymer, filler and oil, wherein the reinforcing filler is silica, carbon black, calcium silicate or mixtures thereof. These reinforcing agents are generally characterized as having particle sizes below 0.1 $\mu m$ and oil absorption above 100. These reinforcing fillers are incorporated in the blend composition at less than 50 parts by weight based on 100 parts of sulfonated polymer, more preferably 1 to 25.

As exemplified in the following illustrative examples, a series of copolymers were prepared.

Example 1

Reaction Formulations:

| Reactant | Copolymer A | Copolymer B |
|---|---|---|
| Butadiene (g) | 116 | 77.3 |
| Sodium Styrene Sulfonate (g) | 18 | 8 |
| Boiled, Distilled Water (g) | 200 | 200 |
| Diisopropylbenzene Hydroperoxide (g) | 2 | 2 |
| Triethylenetetramine (g) | 2 | 2 |
| Tween 80 (g) | 14 | 9.2 |
| $Na_4P_2O_7 \cdot 10H_2O$ (g) | 1.2 | 1.2 |
| 1-Dodecanethiol (g) | 0.84 | 0.56 |

The word 'Tween' is a registered Trade Mark, at least in the United Kingdom.

Free radical emulsion polymerizations were carried out at ~ 20°C in 1-quart (946 cm³) beverage bottles sealed with screw caps. The reaction emulsion was agitated by means of a mechanical shaker. At the end of the reaction (22.5 hours for A and 20 hours for B) the latex was coagulated by the addition of methanol, and the copolymers were washed with methanol and water and dried under vacuum at room temperature. The products are described in Table III.

Films of these copolymers were cast from solution onto Teflon and were first air dried and subsequently vacuum dried at room temperature. Microtensile specimens were cut and tested with an Instron Testing Machine. The mechanical properties of these copolymers are given in Table III. The word 'Instron' is a registered Trade Mark at least in the United Kingdom.

TABLE III

| Co-polymer | % Sulfur | Mole % NaSS | $\eta_{red}$ (dl/g) | Modulus at 100% Elongation (psi) | (KN/m²) | Ultimate Strength (psi) | (KN-m²) | Ultimate Elongation (%) |
|---|---|---|---|---|---|---|---|---|
| 1—A | 0.66 | 1.05 | 1.72 | 83 | 572 | 252 | 1737 | 340 |
| 1—B | 0.46 | 0.79 | 1.66 | 51 | 352 | 148 | 1020 | 810 |

Example 2

Compounds of a plasticizer, stabilizers, filler and oil with two butadiene-sodium styrene sulfonate (NaSS) copolymers from Example I, were prepared on a laboratory micro-mill at 80—90°C. The compound formulations are given in Table IV.

The compounding procedure was as follows. The copolymer was placed on the moving rolls of a micro-mill preheated to 80—90°C. The neat polymer would not band, indicating the presence of strong ionic associations, or physical crosslinks. A premixed blend of a plasticizer (zinc stearate) and stabilizers (antioxidant 2246 and dilauryl thiodipropionate (DLTDP)) was added to the polymer. The plasticizer allowed the polymer to be banded. After achieving a fair band of polymer, the filler (calcium carbonate) and oil (Sunpar 2280) were added, and milling was continued until the mixing was completed. Tensile samples were compression molded at 350°F and the mechanical properties were determined with an Instron Universal Testing Instrument. The tensile characteristics of these compounds are given in Table V.

TABLE IV

| | II—A | II—B |
|---|---|---|
| Copolymer 1—A | 100 parts by weight | — |
| Copolymer 1—B | — | 100 parts by weight |
| Zinc Stearate | 20 | 20 |
| Antioxidant 2246 (2,6, di tert butyl para cresol) | 1.0 | 1.0 |
| Dilauryl Thiodipropionate | 0.5 | 0.5 |
| Purecal U (calcium carbonate) | 50 | 50 |
| Sunpar 2280 (oil) | 25 | 25 |

TABLE V

| Compound | Modulus @ 100% Elongation | | Ultimate Strength | | Ultimate Elongation (%) |
|---|---|---|---|---|---|
| | (psi) | ($KN/m^2$) | (psi) | ($KN/m^2$) | |
| II—A | 108 | 745 | 190 | 1310 | 580 |
| II—B | 57 | 393 | 148 | 1020 | 1200 |

Example 3
Reaction Formulations:

103.5 g butadiene
21.3 g NaSS
266 g water
2.7 g diisopropyl benzene hydroperoxide
2.7 g triethylenetetramine
12.3 g Pluronic F—68
1.6 g $Na_4P_2O_7 \cdot 10H_2O$
0.74 g 1-dodecanethiol

The free radical emulsion polymerization was carried out as described in Example 1. The reaction was carried out for 13.5 hours to a conversion of 93%. The copolymer product contained 0.94% chemically combined sulfur (29 milliequivalents NaSS per 100 grams rubber), had a reduced viscosity in 95 vol % toluene and 5 vol % methanol of 1.10 dl/g, and was completely gel-free.

Example 4

Compounds of a plasticizer, stabilizers, filler, and oil with the butadiene-sodium styrene sulfonate copolymer from Example 3 were prepared on a 3 × 7 inch (7.6 × 17.8 cm) mill at 80°C by the procedure described in Example 2. The compound formulations are described in Table VI and the properties in Table VII.

TABLE VI

| Compound | Parts By Weight polymer | Parts By Weight $ZnSt_2$ | Parts by wt. Purecal U (calcium carbonate) | Parts By Weight Oil (Sunpar 2280) |
|---|---|---|---|---|
| IV—A | 100 | 20 | 0 | 0 |
| IV—B | 100 | 20 | 50 | 25 |
| IV—C | 100 | 20 | 76 | 43 |
| IV—D | 100 | 20 | 142 | 71 |
| IV—E | 100 | 20 | 254 | 127 |

TABLE VII

| Compound | Melt Index @ 160°C 250 psi (1724 KN/m²) (dg/min) | Modulus @ 100% Elongation | | Ultimate Strength | | Ultimate Elongation % | % Set |
|---|---|---|---|---|---|---|---|
| | | (psi) | (KN/m²) | (psi) | (KN/m²) | | |
| IV—A | 0.313 | 73 | 503 | 151 | 1041 | 750 | |
| IV—B | 0.438 | 64 | 441 | 150 | 1034 | 1010 | 69 |
| IV—C | 0.510 | 61 | 421 | 111 | 765 | 780 | 63 |
| IV—D | 1.456 | 51 | 352 | 88 | 607 | 850 | 88 |
| IV—E | 2.759 | 41 | 283 | 62 | 427 | 600 | 75 |

Example 5

Reaction Formulation:

29.0 g butadiene
3.0 g NaSS
50 g boiled, distilled water
0.5 g diisopropylbenzene hydroperoxide
0.5 g triethylene tetramine
2.3 g Tween 80
0.3 g $Na_4P_2O_7 \cdot 10H_2O$
0.14 g 1-dodecanethiol

The free-radical emulsion polymerizations were carried out as described in Example 1, except that 10-ounce (284 cm³) beverage bottles were used. Sample A was reacted for 6 hours to 29% conversion and Sample B was reacted for 22 hours to 67% conversion. The copolymers are described in Table VIII.

Plasticized compositions were prepared by adding 10 weight percent zinc stearate, based on the weight of the polymer to 2% solution of the copolymers in solution. Films of both plasticized and unplasticized copolymers were cast from solution onto teflon and were first air dried and subsequently vacuum dried at room temperature. Microtensile specimens were cut from these films and mechanical properties were measured with an Instron Testing Machine.

The effect of the addition of zinc stearate on the tensile properties of several butadiene-sodium styrene sulfonate copolymers is illustrated in Table VIII. The effect of zinc stearate on the low molecular weight material is insignificant, while for the higher molecular weight polymer, the net effect is to double the tensile strength.

TABLE VIII

| Sample | %S | Mole % NaSS | ($^{n}$red)c=0.2 | Tensile Properties | | | | | | | | | |
|---|---|---|---|---|---|---|---|---|---|---|---|---|---|
| | | | | Without $ZnSt_2$ | | | | | With 10% $ZnSt_2$ | | | | |
| | | | | $E_{100}$ (psi) | (KN/m²) | $\sigma u$ (psi) | (KN/m²) | $\varepsilon u$ (%) | $E_{100}$ (psi) | (KN/m²) | $\sigma$ (psi) | (KN/m²) | $\varepsilon$ (%) |
| IV—A | 0.70 | 1.2 | 0.478 | 18 | 124 | 28 | 193 | 430 | 19 | 131 | 24 | 165 | 300 |
| IV—B | 0.46 | 0.8 | 1.905 | 43 | 296 | 290 | 1999 | >2000 | 56 | 386 | 573 | 3951 | >3000 |

$E_{100}$ = modulus at 100% elongation
$\sigma u$ = ultimate strength
$\varepsilon u$ = ultimate elongation

Example 6
Reaction Formulations:

| | A | B | C | D |
|---|---|---|---|---|
| Butadiene (g) | 29 | 19.3 | 29 | 29 |
| NaSS (g) | 3 | 2.0 | 4.5 | 3 |
| Boiled, distilled water (g) | 50 | 50 | 50 | 50 |
| Diisopropylbenzene hydroperoxide (g) | 0.5 | 0.3 | 0.5 | 0.5 |
| Triethylenetetramine (g) | 0.5 | 0.3 | 0.5 | 0.5 |
| Tween 80 | 3.5 | 1.5 | 3.5 | 2.3 |
| $Na_4P_2O_7 \cdot 10H_2O$ (g) | 0.3 | 0.3 | 0.3 | 0.3 |
| 1-dodecanethiol (g) | 0.14 | 0.10 | 0.21 | 0.14 |

The free radical emulsion polymerizations were carried out for 20 hours as described in Example 5 to conversions of A = 77%; B = 49%; C = 81%; and D = 63%. The sulfur concentrations of the copolymers were A = 0.47%; B = 0.43%; C = 0.69%; and D = 0.51%.

These copolymers were compounded with 10 weight percent zinc stearate according to the procedure of Example 5. As seen in Table IX, the addition of zinc stearate plasticizer, in general, improves the polymer tensile strength and the ultimate elongation.

TABLE IX

| | Tensile Properties | | | | | |
|---|---|---|---|---|---|---|
| | Without $ZnSt_2$ | | | With 10% $ZnSt_2$ | | |
| Sample | Strength (psi) | (KN/m²) | Elongation (%) | Strength (psi) | (KN/m²) | Elongation (%) |
| VI—A | 133 | 917 | 520 | 170 | 1172 | 600 |
| VI—B | 339 | 234 | <1500 | 225 | 1551 | 650 |
| VI—C | 107 | 738 | 500 | 321 | 2213 | 600 |
| VI—D | 100 | 689 | 300 | 274 | 1889 | 520 |

Example 7

Zinc stearate was added according to the procedure of Example 3 (10% by weight) to the butadiene-sodium styrene sulfonate copolymer described in Example 1, Sample A, and its effect on the tensile properties of the copolymer is shown in Table X.

Tensile specimens were prepared by casting films from solutions and die-cutting micro-specimens from these films. In general, the tensile strength of the copolymer is improved by the addition of zinc stearate plasticizer.

TABLE X

| % $ZnSt_2$ | Modulus at 100% Elongation (psi) | (KN/m²) | Ultimate Strength (psi) (psi) | (KN/m²) | Ultimate Elongation (%) |
|---|---|---|---|---|---|
| 0 | 43 | 296 | 236 | 1627 | 180 |
| 10 | 57 | 393 | 308 | 2123 | 1700 |

Example 8

The effect of the addition of zinc stearate on the melt flow and the tensile properties of the butadiene-sodium styrene sulfonate copolymer described in Example 3 is demonstrated in Tables XI and XII.

In general, the addition of zinc stearate improves the melt flow and enhances the tensile properties.

TABLE XI

| % $ZnSt_2$ | Melt Index @ 160°C 476 psi (3282 KN/m²) (dg/min.) |
|---|---|
| 0 | 0.190 |
| 10 | 0.530 |
| 20 | 0.862 |

TABLE XII

| % $ZnSt_2$ | Modulus at 100% Elongation (psi) | Ultimate Strength (psi) | (KN/m²) | Ultimate Elongation (%) |
|---|---|---|---|---|
| 0 | 63 | 119 | 820 | 320 |
| 10 | 58 | 167 | 1151 | 810 |
| 20 | 83 | 151 | 1041 | 750 |

Example 9

Reaction Formulation:

15.6 butadiene
1.6 g sodium styrene sulfonate (NaSS)
25 g boiled, distilled water
0.064 g benzoyl peroxide (initiator)
0.159 g $(NH_4)_2FeSO_4 \cdot 6H_2O$ (reducing agent)
0.649 g sodium lauryl sulfate (emulsifier)
0.198 g $Na_4P_2O_7 \cdot 10H_2O$ (buffer)
0.085 g 1-dodecanethiol (chain transfer agent)

A free radical emulsion polymerization was carried out in a 10 ounce (284 cm³) crown capped beverage bottle at room temperature (~25°C). The reaction emulsion was agitated with a Teflon-coated magnetic stir bar and stirrer. ('Teflon' is a registered Trade Mark at least in the United Kingdom). The reaction was carried out for 20 hours to a yield of 27%, and the latex was coagulated by the addition of an aqueous salt solution. The recovered polymer was washed with water and dried under vacuum at room temperature.

The butadiene-NaSS copolymer contained 3.8 mole percent NaSS (2.0 wt.% sulfur) and had a reduced viscosity of 2.41 dl/g in a mixed solvent of 95 volume % xylene and 5 volume % methanol at a concentration of 0.2 g/dl. The copolymer was not tacky, appeared to be a strong, elastic solid, and was

soluble in a mixed solvent of xylene and methanol (95 vol/5 vol). In the absence of the proper solvent system this material could have been considered to be covalently crosslinked. These experiments show that it was not.

The above sample was compression molded at 250°F (124°C) and analyzed using thermal mechanical analysis. The particular pad examined manifested several transitions when heated at 10°C/minute. A glass transition was clearly apparent at −78°C and a second transition at elevated temperatures near 125°C was apparent. This latter transition was gradual in nature and could be interpreted in part as dissociation of the ionic groups at elevated temperature.

Example 10
Reaction Formulation:

89 g butadiene
9.6 NaSS
160 g boiled, distilled water
0.37 g benzoyl peroxide
0.96 g $(NH_4)_2FeSO_4{\cdot}6H_2O$
7.50 g sodium lauryl sulfate
0.94 g $(Na_4P_2O_7{\cdot}10H_2O$
1.8 1-dodecanethiol

The emulsion polymerization was carried out as described in Example 1 for 67 hours to a yield of 77%. The latex was coagulated by the addition to methanol. The copolymer contained 2.07 mole percent NaSS (1.17 wt.% sulfur) and had an intrinsic viscosity of 1.25 dl/g in a mixed solvent of 95 vol % toluene and 5 vol % methanol. The copolymer was a non-tacky, tough, transparent solid and was nearly completely soluble in a toluene/methanol mixed solvent (95 vol/5 vol).

Example 11
(Comparative)
Reaction Formulations:

93 g butadiene
0 NaSS
160 g boiled, distilled water
0.37 g benzoyl peroxide
0.95 g $(NH_4)_2FeSO_4{\cdot}6H_2O$
7.5 g sodium lauryl sulfate
0.94 g $Na_4P_2O_7{\cdot}10H_2O$
1.8 g 1-dodecanethiol

The formulation of Example 3 was conducted in the same way as Example 2. It will be noted that no sodium styrene sulfonate was added. When isolated after 40 hours using the procedure of Example 2 the resulting transparent polymer was completely soluble in xylene processed in intrinsic viscosity of 1.7 and was tacky with little apparent strength. These results show clearly that the presence of the metal sulfonate groups at the appropriate level dramatically alters the properties and solubility of the resulting product.

Example 12
Reaction Formulation:

101.4 gms Isoprene
9.62 gms sodium styrene sulfonate
150 gm boiled distilled water
0.374 gms benzoyl peroxide
0.951 gms $(NH_4)_2FeSO_4{\cdot}6H_2O$
11.25 gms sodium lauryl sulfate
0.966 gms $Na_4P_2O_7{\cdot}10H_2O$

The formulation was combined and the reaction conducted as in Example 2. The product was divided into 3 parts and coagulated with three different salt solutions employing (a) aluminum chloride, (b) zinc chloride, and (c) magnesium sulfate as the respective coagulating solutions. The isolated products from each of these coagulating systems appeared somewhat different in appearance and properties. The products from (b) and (c) analyzed for 1.55 and 1.33 weight percent sulfur respectively. The product from (a) was insoluble in xylene but was found to dissolve completely in a mixture of 95 vol % xylene/5 vol % methanol. This clear yellow solution containing 2% polymer was modestly viscous. Based on other work it has been observed that an excellent test for ionomer behavior is a combination

of significant water levels (5 to 200%) to a polymer solution based on hydrocarbon solvent with a low level of water miscible alcohol such as methanol. If the polymer contains incorporated within the polymer structure strongly interacting metal sulfonate groups the addition of water will extract alcohol into the aqueous phase and a gelled hydrocarbon phase will result. When the solution above was contacted with water and agitated a white gel appeared, demonstrating the presence of true copolymer.

Example 13
Reaction Formulation:

14.3 g Isoprene
2.52 g sodium styrene sulfonate
25 g boiled distilled water
.061 g benzoyl peroxide
0.157 g $(NH_4)_2FeSO_4 \cdot 6H_2O$
0.624 g sodium lauryl sulfate
0.155 g $Na_4P_2O_7 \cdot 10H_2O$

The reaction was conducted as in Example 1 for 24 hours at room temperature in serum capped flasks stirred with teflon covered magnetic stirrer bars. The product yield was 64%, the sulfur content of the resulting product was 1.24 weight percent. The intrinsic viscosity in 95 vol % xylene/5 vol % methanol was 1.07, and the product was observed to be an elastic solid. The isolated product was analyzed via thermal mechanical analysis with a weighted load of 10 gms and a heating rate of 10°C/minute. A low temperature transition of —60°C was clearly seen corresponding to a polymer glass transition while at higher temperatures a more gradual softening point was seen estimated to be 123°C. This latter transition is interpreted as the dissociation temperature of the metal sulfonate associations.

Example 14
Reaction Formulation:

29.0 g butadiene
3.0 g sodium styrene sulfonate (NaSS)
50.0 g boiled, distilled water
0.5 g diisopropylbenzene hydroperoxide (initiator)
0.5 g triethylene tetramine (reducing agent)
2.3 g Tween 80 (emulsifier)
0.3 g Tween 80 (emulsifier)
0.3 g $Na_4P_2O_7 \cdot 10H_2O$ (buffer)
0.14 g 1-dodecanethiol (chain transfer agent)

Free radical emulsion polymerizations were carried out at ~20°C in 10-ounce (284 $cm^3$) beverage bottles sealed with crown-type screw caps. The reaction emulsion was agitated by means of a mechanical shaker. The latex was coagulated at the end of the reaction by the addition of methanol, and the copolymers were washed with methanol and water and dried under vacuum at room temperature.

The reactions and products are summarised in Table XIII. The copolymers were strong, elastic solids and were almost completely soluble in a mixed solvent of toluene and methanol (95 vol/5 vol). In the absence of the methanol cosolvent, that is, in a hydrocarbon solvent such as xylene, these copolymers were only about 50% soluble. It will be noted that toluene is a good solvent for polybutadiene and incomplete solubility of these polymers in toluene could have been considered to be evidence of covalent crosslinking. Solubility of these polymers in the mixed solvent, however, shows that these materials are not covalently crosslinked. This data could be interpreted as evidence for ionic crosslinking in these copolymers due to the presence of the metal sulfonate moiety.

TABLE XIII

| Experiment | RXN Time (hrs.) | Conversion (%) | % Sulfur in Copolymer | $n_{red}$[1] (dl/g) | Solubility in xylene (%) | Solubility in 95 vol % toluene/ 5 vol % methanol (%) |
|---|---|---|---|---|---|---|
| 1—A | 16.3 | 64 | 0.56 | 1.76 | 44 | 100 |
| 1—B | 21.5 | 67 | 0.46 | 1.90 | 56 | 95 |

[1]Reduced viscosity at a concentration of 0.2 g/dl in 95 vol % TOLUENE/5 VOL % methanol

Example 15

Reaction Formulation:

38.8 g butadiene
4.0 g NaSS
100.0 g boiled distilled water
1.0 g triethylene tetramine
1.0 g diisopropylbenzene hydroperoxide
4.6 g Pluronic F—68 (emulsifier)
0.6 g $Na_4P_2O_7 \cdot 10H_2O$
0.28 g 1-dodecanethiol

The emulsion polymerization was carried out as described in Example 1, except that a 12-ounce (341 cm$^3$) beverage bottle was used. The reaction was carried out for 20 hours to a yield of 93%. The product was a non-tacky, elastic solid. The copolymer contained 0.61% chemically combined sulfur (19 millequivalents NaSS per 100 grams total rubber) and had a reduced viscosity at 25°C measured at a concentration of 0.2 g polymer in 100 ml of a mixed solvent of 95 vol % toluene at 5 vol % methanol, of 2.09 dl/g. The copolymer was completely soluble in a mixed solvent of 95 vol % toluene and 5 vol % methanol, but was only 59% soluble in straight toluene.

A thin film was cast on teflon from a solution of 95 vol % toluene and 5 vol % methanol and was air dried, followed by vacuum drying at room temperature. Microtensile specimens were cut from this film and tensile properties were measured with an Instron Testing Machine. The properties of this copolymer were as follows:

| | | |
|---|---|---|
| Modulus at 100% elongation | = | 63 psi (434 KN/m$^2$) |
| Ultimate strength | = | 521 psi (3592 KN/m$^2$) |
| Ultimate elongation | = | 1500% |

Example 16

(Comparative)

Reaction Formulation:

38.8 g butadiene
100 g boiled distilled water
1.0 g triethylene tetramine
1.0 g diisopropylbenzene hydroperoxide
4.6 Pluronic F—68 (emulsifier)
0.6 g $Na_4P_2O_7 \cdot 10H_2O$
0.28 g 1-dodecanethiol

The polymerization of Example 3 was conducted in the same way as Example 2. It will be noted that no sodium styrene sulfonate was added. No polymer product was recovered after 20 hours reaction.

Example 17

Reaction Formulation:

38.8 butadiene
8.0 g sodium styrene sulfonate
100 g boiled, distilled water
1.0 g triethylene tetramine
1.0 g diisopropylbenzene hydroperoxide
0.6 g $Na_4P_2O_7 \cdot 10H_2O$
0.28 g 1-dodecanethiol

The copolymerization of Example 4 was conducted in the same way as Example 2. It will be noted that no emulsifier was added. The reaction was carried out for 20 hours to 14% conversion. The product was a non-tacky, elastic solid and contained 1.31% chemically bound sulfur (41 millequivalents NaSS per 100 grams total rubber). The reduced viscosity at 25°C measured at a polymer concentration of 0.2% in a mixed solvent of 95 vol % toluene and 5 vol % methanol was 0.65 dl/g. The copolymer was completely soluble in a mixed solvent of 95 vol % toluene and 5 vol. % methanol, but only 66% soluble in toluene alone.

Example 18
(Comparative)
Reaction Formulation:

38.8 g butadiene
4.0 g NaSS
100 g boiled, distilled water
1.0 g triethylene tetramine
1.0 g diisopropylbenzene hydroperoxide
4.6 g sodium lauryl sulfate (emulsifier)
0.6 g $Na_4P_2O_7 \cdot 10H_2O$
0.28 g 1-dodecanethiol

The copolymerization of example 5 was conducted in the same way as Example 2. The conversion after 20 hours reaction was 37%. The copolymer was a non-tacky elastic solid. The copolymer contained 0.61% chemically combined sulfur (19 milliequivalents NaSS per 100 grams rubber) and had a reduced viscosity at 25°C measured at a polymer concentration of 0.2% in a mixed solvent of 95 vol % toluene and 5 vol % methanol of 1.3 dl/g. The copolymer was completely soluble in a mixed solvent of 95 vol % toluene and 5 vol % methanol, but only 30% soluble in toluene alone.

Example 19
(Comparative)

It is well known that polymers prepared from conjugated dienes can under certain circumstances be extremely susceptible to covalent crosslinking. This is especially possible in the presence of ferrous ions, such as would be present when a ferrous ion redox activator is used in the polymerization. The copolymers described in U.S. 117199 were prepared using a ferrous ion redox activator and it is observed that these copolymer products are not highly reproducible in terms of apparent molecular weight, oxidatively stable, nor thermally stable, for extended periods of time.

The copolymers described in Examples 1—5 of the present invention are reproducible insofar as sulfonate concentration, and molecular weight, and are observed to be thermally stable and oxidatively stable for extended periods of time.

Oxidatively stable is used here to describe a polymer for which neither the gel content nor the molecular weight change by more than 10% when stored in air at ambient temperature for an extended period of time (1—4 weeks).

**Claims**

1. A solid elastomeric co- or terpolymer comprising at least 80% by weight of units derived from at least one conjugated diene having from 4 to 10 carbon atoms per molecule and a minor proportion by weight of units derived from a metal or amine neutralised sulphonate monomer having the formula:

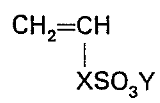

where X is aromatic or $(CH_2)_n$ wherein n = 0, 1, 2, 3 or 4, and Y is a cation selected from Groups IA, IIA, IB and IIB of the periodic table or an amine of the formula:

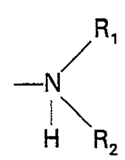

where $R_1$ and $R_2$ are $C_1$ to $C_{12}$ aliphatic groups or hydrogen, said co- or terpolymer being water insoluble and having at least 0.5 weight percent but less than 5 weight percent of chemically combined sulphur.

2. A co- or terpolymer according to claim 1 wherein said conjugated diene is 1,3-butadiene, isoprene, chloroprene or a mixture thereof.

3. A co- or terpolymer according to either of claims 1 and 2 wherein said sulphonate containing monomer is a metal neutralised styrene sulphonate.

4. A co- or terpolymer according to any one of the preceding claims which is gel-free, thermally stable and oxidatively stable.

5. A polymeric composition which comprises:

(a) a solid elastomeric co- or terpolymer according to any one of the preceding claims;

(b) less than 80 parts by weight of a preferential plasticiser per 100 parts of the sulphonated co- or terpolymer;

(c) 25 to 300 parts by weight of a filler per 100 parts of the sulphonated co- or terpolymer; and

(d) 20 to 200 parts by weight of a non-polar process oil having less than 2 weight percent polar compounds per 100 parts of the sulphonated co- or terpolymer.

6. A composition according to claim 5, wherein said preferential plasticiser is a fatty acid having 8 to 30 carbon atoms per molecule, a metallic salt of said carboxylic acid, an amide or a mixture thereof.

7. A composition according to claim 6, wherein said metallic salt is zinc stearate or calcium stearate.

8. A composition according to claim 5, wherein said preferential plasticiser is a combination of a carboxylic acid and a metallic salt of said carboxylic acid, the metal ion of said metallic salt being aluminium, antimony, iron, lead or a metal of Groups IA, IIA, IB or IIB of the Periodic Table of Elements or a mixture thereof.

9. A composition according to any one one claims 5 to 8 wherein said filler is clay, talc, calcium carbonate or a mixture thereof.

10. A composition according to any one of claims 5 to 9 wherein said nonpolar process oil is paraffinic, naphthenic or aromatic or a mixture thereof.

11. A process for forming a solid elastomeric co- or terpolymer according to any one of claims 1, 2 or 3 which comprises contacting a solution of at least one said conjugated diene with said sulphonate-containing monomer dispersed in water with a free radical initiator which is water insoluble but soluble in the hydrocarbon phase and a water soluble reducing agent in the presence of a surfactant and providing a temperature sufficient to initiate polymerization wherein the resulting latex is coagulated and the recovered co- or terpolymer is washed with water and subsequently dried.

12. A process according to claim 11 wherein at least one additive is added to the reaction medium, the additive being a buffering agent, a chain transfer agent or a mixture thereof.

**Patentansprüche**

1. Festes, elastomeres Co- oder Terpolymer gekennzeichnet durch mindestens 80 Gew.% an Einheiten, die sich von mindestens einem konjugierten Dien mit 4 bis 10 Kohlenstoffatomen je Molekül ableiten, und einen untergeordneten Gewichtsanteil ain Einheiten, die sich von einem metall- oder aminneutralisierten Sulfonatmonomer mit der Formel:

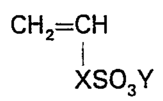

ableiten, in der X aromatisch oder $(CH_2)_n$ mit n = 0, 1, 2, 3 oder 4 ist und Y ein Kation ausgewählt aus den Gruppen IA, IIA. IB und IIB des periodischen Systems der Elemente oder ein Amin der Formal:

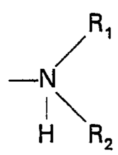

ist, in der $R_1$ und $R_2$ aliphatische $C_1$—$C_{12}$-Gruppen oder Wasserstoff sind, wobei das Co- oder Terpolymer wasserunlöslich ist und mindestens 0,5 Gew.% aber weniger als 5 Gew.% chemisch gebundenen Schwefel enthält.

2. Co- oder Terpolymer nach Anspruch 1, dadurch gekennzeichnet, daß das konjugierte Dien 1,3-Butadien, Isopren, Chloropren oder eine Mischung derselben ist.

3. Co- oder Terpolymer nach Anspruch 1 oder 2, dadurch gekennzeichnet, daß das Sulfonat enthaltende Monomer ein metallneutralisiertes Styrolsulfonat ist.

4. Co- oder Terpolymer nach einem der vorangegangenen Ansprüche, dadurch gekennzeichnet, daß est gelfrei, thermisch stabil und oxydationsstabil ist.

5. Polymere Zusammensetzung gekennzeichnet durch

(a) eine festes elastomeres Co- oder Terpolymer nach einem der vorangegangenen Ansprüche;

(b) weniger als 80 Gewichtsteile eines bevorzugten Weichmachers je 100 Teile des sulfonierten Co- oder Terpolymer;

(c) 25 bis 300 Gewichtsteile eines Füllstoffes je 100 Teile des sulfonierten Co- oder Terpolymer; und

(d) 20 bis 200 Gewichtsteile eines nichtpolaren Prozeßöls mit weniger als 2 Gew.% polaren Verbindungen je 100 Teile des sulfonierten Co- oder Terpolymer.

6. Zusammensetzung nach Anspruch 5, dadurch gekennzeichnet, daß der bevorzugte Weichmacher eine Fettsäure mit 8 bis 30 Kohlenstoffatomen je Molekül, ein Metallsalz dieser Carbonsäure, ein Amid oder eine Mischung derselben ist.

7. Zusammensetzung nach Anspruch 6, dadurch gekennzeichnet, daß das Metallsalz Zinkstearat oder Calciumstearat ist.

8. Zusammensetzung nach Anspruch 5, dadurch gekennzeichnet, daß der bevorzugte Weichmacher eine Kombination einer Carbonsäure und eines Metallsalzes der Carbonsäure ist, wobei das Metallion des Metallsalzes Aluminium, Antimon, Eisen, Blei oder ein Metall der Gruppen IA, IIA, IB oder IIB des periodischen Systems der Elemente oder eine Mischung derselben ist.

9. Zusammensetzung nach einem der Ansprüche 5 bis 8, dadurch gekennzeichnet, daß der Füllstoff Ton, Talk, Calciumcarbonat oder eine Mischung derselben ist.

10. Zusammensetzung nach einem der Ansprüche 5 bis 9, dadurch gekennzeichnet, daß das nichtpolare Prozeßöl paraffinisch, naphtenisch oder aromatisch oder eine Mischung derselben ist.

11. Verfahren zur Herstellung eines festen elastomeren Co- oder Terpolymer nach einem der Ansprüche 1, 2 oder 3, dadurch gekennzeichnet, daß man eine Lösung mindestens eines der konjugierten Diene mit dem Sulfonat enthaltenden Monomer dispergiert in Wasser mit einem frei radikalischen Initiator, der wasserunlöslich, aber löslich in der Kohlenwasserstoffphase ist, und einem wasserlöslichen Reduktionsmittel in Gegenwart eines Tensids kontaktiert, eine zur Initiierung der Polymerisation ausreichende Temperatur einstellt, den resultierenden Latex koagoliert und das gewonnene Co- oder Terpolymer mit Wasser wäscht und anschließend trocknet.

12. Verfahren nach Anspruch 11, dadurch gekennzeichnet, daß mindestens ein Additiv zu dem Reaktionsmedium gegeben wird, wobei das Additiv ein Puffermittel, ein Kettenübertragungsmittel oder eine Mischung derselben ist.

**Revendications**

1. Co- ou terpolymère élastomère solide comprenant au moins 80% en poids de motifs provenant d'au moins un diène conjugué ayant de 4 à 10 atomes de carbone par molécule et une proportion mineure en poids de motifs provenant d'un sulfonate monomère neutralisé par un métal ou une amine et ayant pour formule:

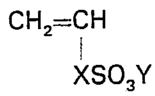

(dans laquelle X est un groupe aromatique ou $(CH_2)_n$ dans lequel n vaut 0, 1, 2, 3 ou 4, et Y est un cation choisi parmi les groupes IA, IIA, IB et IIB du Tableau Périodique, ou une amine de formule:

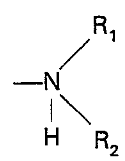

dans laquelle $R_1$ et $R_2$ sont des groupes aliphatiques en $C_1$ à $C_{12}$ ou de l'hydrogène), ledit co- ou terpolymère étant insoluble dans l'eau et comportant au moins 0,5% en poids mais moins de 5% en poids de soufre chimiquement combiné.

2. Co- ou terpolymère selon la revendication 1, dans lequel ledit diène conjugué est le butadiène-1,3, l'isoprène, le chloroprène ou un de leurs mélanges.

3. Co- ou terpolymère selon l'une revendications 1 et 2, dans lequel ledit monomère contenant du sulfonate est un styrène sulfonate neutralisé par du métal.

4. Co- ou terpolymère selon l'une quelconque des revendications précédentes, qui est sans gel, thermiquement stable et stable à l'oxydation.

5. Composition polymère qui comprend:

(a) un co- ou terpolymère élastomère solide selon l'une quelconque des revendications précédentes;

(b) moins de 80 parties en poids d'un plastifiant préférentiel, pour 100 parties du co- ou terpolymère sulfoné;

(c) 25 à 300 parties en poids d'une charge pour 100 parties du co- ou terpolymère sulfoné; et

(d) 20 à 200 parties en poids d'une huile non polaire de traitement ayant moins de 2% en poids de composés polaires pour 100 parties du co- ou terpolymère sulfoné.

6. Composition selon la revendication 5, dans laquelle ledit plastifiant préférentiel est un acide gras ayant 8 à 30 atomes de carbone par molécule, un sel métallique dudit acide carboxylique, un amide ou un le leurs mélanges.

7. Composition selon la revendication 6, dans laquelle le sel métallique est le stéarate de zinc ou le stéarate de calcium.

8. Composition selon la revendication 5, dans laquelle ledit plastifiant préférentiel est une combinaison d'un acide carboxylique et d'un sel métallique dudit acide carboxylique, l'ion métal dudit

sel métallique étant l'aluminium, l'antimoine, le fer, le plomb ou un métal des groupes IA, IIB, IB ou IIB de la Classification Périodique des Eléments ou un de leurs mélanges.

9. Composition selon l'une quelconque des revendications 5 à 8, dans laquelle ladite charge est de l'argile, du talc, du carbonate de calcium ou un de leurs mélanges.

10. Composition selon l'une quelconque des revendications 5 à 9, dans laquelle ladite huile non polaire de traitement est paraffinique, naphténique ou aromatique ou un de leurs mélanges.

11. Procédé pour former un co- ou terpolymère élastomère solide selon l'une quelconque des revendications 1, 2 ou 3, que comprend la mise en contact d'une solution d'au moins l'un desdits diènes conjugués avec ledit monomère contenant du sulfonate dispersé dans de l'eau avec un amorceur de radicaux libres qui est insoluble dans l'eau mais soluble dans la phase hydrocarbonée et un agent réducteur hydrosoluble en présence d'un tension-actif et la réalisation d'une température suffisante pour amorcer la polymérisation, procédé dans lequel le latex résultant est coagulé et le co- ou terpolymère récupéré est lavé à l'eau puis séché.

12. Procédé selon la revendication 11, dans lequel au moins un additif est ajouté au milieu réactionnel, l'additif étant un agent tampon, un agent de transfert de chaîne, ou un de leurs mélanges.